(19) Europäisches Patentamt

European Patent Office

Office européen des brevets

(11) **EP 0 568 453 B1**

(12) **FASCICULE DE BREVET EUROPEEN**

(45) Date de publication et mention
de la délivrance du brevet:
**20.05.1998 Bulletin 1998/21**

(51) Int Cl.6: **H04Q 11/00**

(21) Numéro de dépôt: **93401105.7**

(22) Date de dépôt: **28.04.1993**

(54) **Système optique de raccordement d'installations d'abonné à un centre de commutation d'un réseau de télécommunication assurant des services interactifs et des services non interactifs**

Optisches System zum Anschluss der Teilnehmereinrichtungen an eine Vermittlungszentrale eines Telekommunikationsnetzes mit interaktiven und nichtinteraktiven Diensten

Optical system for connecting subscriber units to the switching centre of a telecommunications network providing interactive and non-interactive services

(84) Etats contractants désignés:
**AT BE CH DE ES FR GB IT LI NL SE**

(30) Priorité: **30.04.1992 FR 9205399**

(43) Date de publication de la demande:
**03.11.1993 Bulletin 1993/44**

(73) Titulaire: **ALCATEL ALSTHOM COMPAGNIE GENERALE D'ELECTRICITE**
**75008 Paris (FR)**

(72) Inventeurs:
• **Vinel, Paul**
**F-78140 Velizy (FR)**
• **Perrier, Philippe**
**F-75013 Paris (FR)**

(74) Mandataire: **Sciaux, Edmond et al**
**ALCATEL ALSTHOM,**
**Département de Propriété Industrielle,**
**30, avenue Kléber**
**75116 Paris (FR)**

(56) Documents cités:
**EP-A- 0 536 041          WO-A-91/09479**
**US-A- 4 768 188**

• CONFERENCE PUBLICATION, FOURTEENTH EUROPEAN CONFERENCE ON OPTICAL COMMUNICATION, 11- 15 SEPT. 1988. VOL.1 PAGES 203-206, BRIGHTON GB , XP145111 J.R. STERN ET AL 'TPON - a Passive Optical Network for Telephony'
• PROCEEDINGS. THE INTERNATIONAL SWITCHING SYMPOSIUM, 28 MEI-1 JUIN 1990, VOL.1 PAGES 147-152, STOCKHOLM SE , XP130835 A. FIORETTI ET AL 'A Novel Distributed Photonic Switch'

## Description

L'invention concerne un système optique de raccordement d'installations d'abonné à un centre de commutation d'un réseau de télécommunication assurant des services interactifs et des services non interactifs. Un système optique de raccordement a une grande bande passante permettant aux installations d'abonné de bénéficier des services disponibles dans un réseau de télécommunication à large bande. On distingue deux types de service : les services interactifs tels que la transmission de données, et la téléphonie, avec ses variantes telles que la conférence à trois; et des services non interactifs, qui n'ont qu'un seul sens de transmission et qui diffusent généralement à grande échelle. Un exemple typique de service de diffusion à grande échelle est la diffusion de programmes audio ou vidéo.

La demande de brevet EP-A-0 536 041 publiée le 7.4.93 décrit un système de raccordement optique à un réseau de télécommunication qui peut assurer des services interactifs et qui pourrait assurer aussi des services non interactifs. Dans ce système, chaque installation d'abonné est reliée par une fibre optique à un réseau de distribution qui est lui-même relié par un certain nombre de fibres optiques à des équipements appelés joncteurs situés dans le centre de commutation. Chaque joncteur comporte un émetteur optique et un récepteur optique ayant une même longueur d'onde fixée et différente pour chaque joncteur. Chaque installation d'abonné comporte un émetteur optique et un récepteur optique accordés sur une longueur d'onde réglable. Une longueur d'onde est affecté à une installation d'abonné par une unité de commande située dans le centre, au moment de l'établissement de chaque communication entre cette installation d'abonné et un joncteur. Le nombre d'installations d'abonné est très supérieur au nombre de joncteurs auxquels elles sont reliées, parce que les installations d'abonné ne sont pas toutes en cours de communication à chaque instant. L'affectation dynamique des longueurs d'onde aux installations d'abonné permet de réutiliser une même longueur d'onde pour différentes installations d'abonné qui établissent des communications non simultanées. Le groupe de joncteurs relié à un même réseau de diffusion comporte un nombre de joncteurs qui est limité par le nombre de longueurs d'onde pouvant être séparées à l'émission et la réception, par la technologie disponible.

Un groupe d'installations d'abonné est relié à un groupe de joncteurs, par l'intermédiaire d'un réseau de distribution ayant la propriété de diffuser un signal optique émis par l'un quelconque des émetteurs du système de raccordement vers chacun des récepteurs optiques du système de raccordement. Un centre de commutation peut comporter plusieurs systèmes de raccordement identiques comportant chacun un groupe de joncteurs, relié à un groupe d'installations d'abonné par des réseaux de diffusion indépendants les uns des autres, de manière à pouvoir réutiliser plusieurs fois un même ensemble de longueurs d'onde.

Dans chaque groupe de joncteurs, un joncteur dit de commande est utilisé pour l'établissement des communications. Lorsqu'une installation d'abonné devient active, elle envoie un message en utilisant la longueur d'onde du joncteur de commande. Le joncteur de commande transmet le message aux moyens de commande du centre de commutation. Les moyens de commande indiquent au joncteur de commande l'identité d'un joncteur disponible pour établir une communication. Le joncteur de commande envoie un message à l'installation d'abonné, sur la longueur d'onde du joncteur de commande. Ce message indique à l'installation d'abonné l'identité du joncteur disponible. L'installation d'abonné en déduit la longueur d'onde du joncteur disponible. Cette longueur d'onde est affectée à cette installation d'abonné pour toute la durée de cette communication, et seulement pour cette durée.

Pour bénéficier d'un service non interactif une installation d'abonné demanderait au joncteur de commande l'établissement d'une communication entre cette installation d'abonné et les moyens fournissant les signaux du service non interactif qui est demandé par l'installation d'abonné. Les moyens de commande du centre de commutation commandent l'établissement d'une connexion dans le réseau de connexion, pour relier un joncteur disponible, autre que le joncteur de commande, au service demandé. Le nombre de joncteurs occupés par un même service est égal au nombre d'installations d'abonné ayant demandé ce service. Ce système de raccordement convient donc mal pour des services non interactif, car il faudrait un nombre de joncteurs proche du nombre d'installations d'abonné lorsqu'un service non interactif est demandé simultanément par une grande majorité des installations d'abonné.

Le but de l'invention est de perfectionner ce système pour lui permettre réellement d'assurer des services non interactifs, c'est-à-dire sans avoir à multiplier le nombre de joncteurs. par rapport au cas où le système assure seulement des services interactifs, pour lesquels il est possible d'utiliser un nombre de joncteurs très inférieur au nombre d'installations d'abonné étant donné que le traffic pour ces communications reste toujours assez faible, par exemple de l'ordre de 0,05 erlang.

L'objet de l'invention est un système optique de raccordement d'installations d'abonné (voir la revendication 1).

Le système ainsi caractérisé assure des services non interactifs en plus des services interactifs sans joncteurs supplémentaires, puisqu'il utilise le joncteur de commande pour toutes les installations d'abonné utilisant seulement un service non interactif, quel que soit le nombre de ces installations d'abonné. Le joncteur de commande émet les signaux de services non interactifs tout en continuant ses fonctions habituelles de réception des demandes d'établissement de communications et d'émission des messages en réponse à ces demandes.

Ce système a cependant un inconvénient lorsque le service non interactif doit être payé par l'abonné qui l'utilise. En effet, le réseau de distribution optique distribue vers toutes les installations d'abonné les signaux optiques émis par le joncteur de commande. Pour remédier à ce problème, un mode de réalisation préférentiel du système selon l'invention est caractérisé en ce que le système de raccordement comporte en outre des moyens pour chiffrer des signaux de services non interactifs; et en ce qu'au moins une installation d'abonné comporte en outre des moyens pour déchiffrer ces signaux.

Selon un mode de réalisation préférentiel, le système selon l'invention comporte des joncteurs qui sont tous identiques, mis à part leur longueur d'onde; le joncteur de commande étant un joncteur quelconque choisi par les moyens de commande du centre de commutation, parmi les joncteurs en état de marche; le système selon l'invention étant caractérisé en ce que ces moyens de commande commandent le réseau de connexion pour connecter en permanence le joncteur choisi comme joncteur de commande, aux services non interactifs.

Le système ainsi caractérisé permet d'assurer tous les services avec grande fiabilité puisqu'en cas de panne du joncteur choisi comme joncteur de commande, les moyens de commande peuvent modifier les connexionx établies par le réseau de connexion, de façon à transmettre les signaux des services non interactifs vers un autre joncteur qui va pouvoir instantanément les diffuser de nouveau, et remplir les fonctions de joncteur de commande pour l'établissement des communications.

L'invention sera mieux comprise et d'autres détails apparaîtront à l'aide de la description ci-dessous et des figures l'accompagnant :

- la figure 1 représente le schéma synoptique d'un exemple de réalisation du système de raccordement, selon l'invention;
- la figure 2 représente un schéma fonctionnel de cet exemple de réalisation;
- la figure 3 représente des chronogrammes illustrant le fonctionnement de cet exemple de réalisation;
- la figure 4 illustre les principales étapes de l'établissement d'une communication dans cet exemple de réalisation;
- la figure 5 représente le schéma synoptique d'un exemple de réalisation d'une installation d'abonné;
- la figure 6 représente le schéma synoptique d'une exemple de réalisation du joncteur destiné à fonctionner en liaison avec l'installation d'abonné dont le schéma synoptique est représenté sur la figure 5;
- les figures 7 et 8 illustrent par des chronogrammes l'échange d'informations entre cette installation d'abonné et ce joncteur;
- la figure 9 représente le schéma synoptique d'un exemple de réalisation d'un réseau de diffusion permettant de limiter l'effet d'une coupure d'un câble de transmission, dans un exemple de réalisation du système selon l'invention.

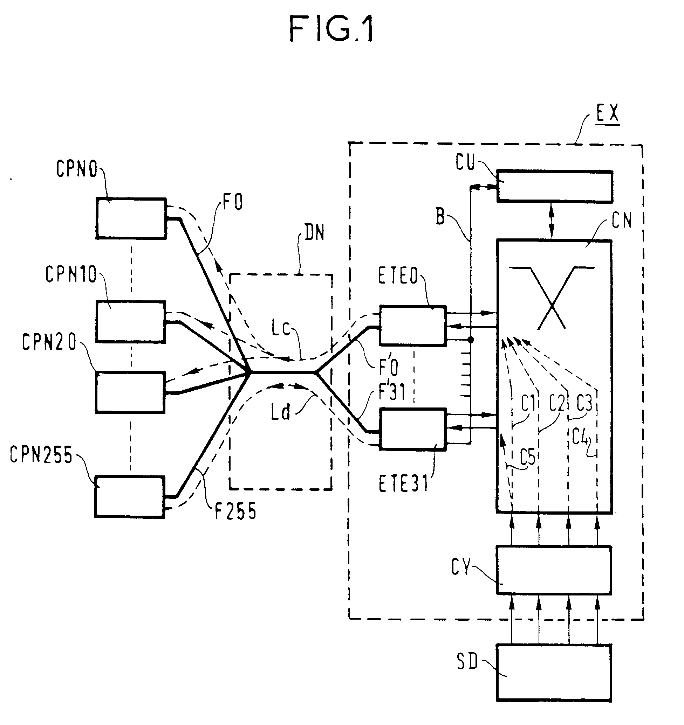

La figure 1 représente un exemple de réalisation du système de raccordement, selon l'invention, comportant un groupe de 256 installations d'abonné, CPNO, ..., CPN255, reliées par un réseau de distribution optique DN à un centre de commutation EX faisant partie d'un réseau de télécommunication à large bande, mettant en oeuvre le mode de transfert asynchrone. Le nombre de 256 installations d'abonné est donné à titre d'exemple. Leur nombre total peut être plus élevé. La limitation provient des possibilités de transmission optique. Chacune des installations d'abonné CPNO, ..., CPN255 possède une entrée-sortie optique qui est reliée par une fibre optique unique (FO, ..., F255) au réseau de distribution DN, qui est représenté comme une simple fibre optique sur ce schéma synoptique.

Le centre EX comporte un réseau de connexion CN et 32 joncteurs ETE0, ..., ETE31. Chaque joncteur comporte une entrée-sortie optique reliée par une fibre optique unique F'O, ..., F'31 au réseau de distribution DN; une entrée électrique et une sortie électrique reliées respectivement à une sortie électrique et à une entrée électrique du réseau de connexion CN. Le centre EX comporte une unité de commande CU reliée électriquement par une liaison B à chacun des joncteurs ETEO, ..., ETE31; et reliée électriquement à une entrée-sortie du réseau de connexion CN. Le centre EX comporte en outre des dispositifs de chiffrement CY ayant une pluralité d'entrées reliées respectivement à des services non interactifs, de diffusion à grande échelle, pour des programmes vidéo par exemple. Les dispositifs de chiffrement CY ont une pluralité de sorties reliées respectivement à une pluralité d'entrées du réseau de connexion CN.

Une longueur d'onde fixée est attribuée à chacun des trente deux joncteurs, pour l'émission et pour la réception. Dans cet exemple, on suppose que la technologie disponible permet de réaliser une émission ou une réception sur trente deux longueurs d'onde différentes. Naturellement il est possible de prévoir plusieurs groupes de trente deux joncteurs dans le même centre, chaque groupe de joncteurs étant associé à un réseau de distribution optique indépendant des autres réseaux de distribution optique pour éviter la superposition de signaux ayant une même longueur d'onde; et chaque groupe de trente deux joncteurs étant associé à un groupe de 256 installations d'abonné.

La fonction de joncteur de commande est attribuée à l'un des trente deux joncteurs, par exemple ETEO, par l'unité de commande CU. Cette attribution peut être reconsidérée si l'unité de commande CU détecte que le joncteur choisi ne fonctionne plus correctement. Chaque joncteur émet périodiquement, sur sa longueur d'onde, un message contenant l'identité de ce joncteur, afin que chaque installation d'abonné tienne à jour une table reliant l'identité de chaque joncteur et la longueur d'onde qui lui est propre. En particulier, chaque installation d'abonné détermine ainsi quelle longueur d'onde correspond au joncteur choisi comme joncteur de commande.

L'unité de commande CU commande le réseau de connexion CN pour établir des connexions C1, ..., C4 pour relier les sorties des dispositifs de chiffrement CY à l'entrée du joncteur de commande ETEO. Les dispositifs de chiffrement CY fournissent sur leurs sorties des signaux numériques mis sous la forme de cellules selon un format normalisé pour le mode de transfert asynchrone.

Ainsi le joncteur de commande reçoit tous les signaux fournis par les services non interactifs SD, sous la forme d'une suite de cellules; puis les diffuse vers toutes les installations d'abonné CPNO, ..., CPN255, via le réseau de diffusion DN.

Les installations des abonnés qui souhaitent bénéficier de certains services non interactifs n'ont pas à émettre le moindre message vers le joncteur de commande ETEO. Elles n'ont qu'à décoder les signaux reçus sur sa longueur d'onde Lc. Les installations des abonnés ayant payé pour un certain service non interactif comportent un dispositif de déchiffrement, non représenté et qui met en oeuvre la loi de déchiffrement propre au service considéré.

Le nombre d'installations d'abonné reliées à un groupe de joncteurs dépend de la charge que ces installations d'abonnés apportent au groupe de joncteurs. En général les installations d'abonné ne sont pas actives simultanément, c'est-à-dire ne sont pas toutes en communication interactive. Par conséquent le nombre de joncteurs peut être inférieur au nombre d'installations d'abonnés. D'autre part, un multiplexage temporel décrit plus loin permet de multiplier le nombre d'installations d'abonné, dès lors que chacune de celles-ci a besoin d'une bande passante nettement inférieure à celle procurée par un joncteur.

Chaque installation d'abonné comporte un émetteur optique et un récepteur optique accordés sur une même longueur d'onde qui est choisie parmi les trente deux longueurs d'onde utilisées par les joncteurs ETEO,...,ETE31. Lorsqu'une installation d'abonné est inactive, son récepteur est en veille sur la longueur d'onde Lc du joncteur de commande ETEO.

Par exemple, sur la figure 1 les installations d'abonné CPNO, CPN10, CPN20 sont en veille sur la longueur d'onde Lc, pour recevoir des commandes éventuelles provenant du joncteur de commande ETEO. Tout en restant en veille, elles peuvent bénéficier de n'importe quel service parmi les services de diffusion à grande échelle, SD. Simultanément une installation d'abonné CPN255 est en communication interactive avec une autre installation d'abonné du réseau de télécommunication via le joncteur ETE31 sur une longueur d'onde Ld. Si, au cours de cette communication, l'installation d'abonné CPN255 demande à l'unité de commande CU, via le joncteur ETE31, de bénéficier d'un certain service non interactif, l'unité de commande CU établit une connexion C5 dans le réseau de connexion CN pour acheminer vers le joncteur ETE31 un signal correspondant au service demandé.

Selon un mode de réalisation préférentiel, chaque joncteur, outre le joncteur de commande, peut être alloué à plusieurs installations d'abonné pour des communications interactives différentes et simultanées, au moyen d'une sorte de multiplexage temporel, qui se superpose au multiplexage spectral réalisé par le réseau de diffusion optique DN. Ainsi la bande passante de chaque joncteur peut être utilisée de manière plus optimale.

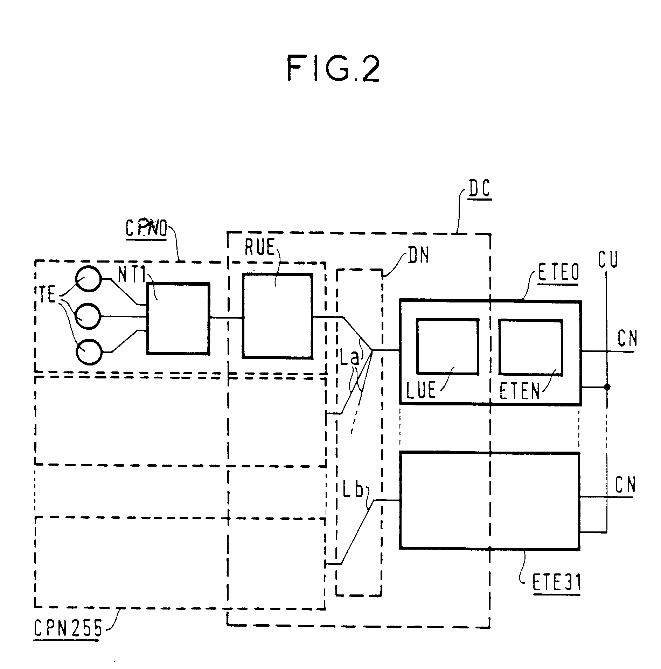

La figure 2 représente un schéma fonctionnel de cet exemple de réalisation du système de raccordement, selon l'invention. Ce schéma fonctionnel fait apparaître les fonctions nouvelles par rapport à celles déjà existantes dans le système décrit dans la demande de brevet français n° 91 12264. Toutes les installations d'abonné CPNO, ..., CPN255 peuvent être constituées de blocs fonctionnels identiques. Par exemple, l'installation d'abonné CPNO comporte : un ou plusieurs terminaux TE, tels que des postes téléphoniques, vidéophones, téléfax, calculateur, poste de télévision, etc; une terminaison numérique d'abonné NT1 telle que définie par le CCITT dans la recommandation I413; et un équipement d'usager éloigné RUE. L'équipement d'usager éloigné RUE remplit les fonctions connues décrites dans la demande de brevet n°91 12264, pour l'affectation d'une longueur d'onde à l'installation d'abonné CPNO, plus des fonctions supplémentaires pour le multiplexage temporel, consistant essentiellement à commander l'émission des informations seulement pendant un intervalle de temps défini par l'unité de commande CU du central.

Tous les joncteurs ETEO,...,ETE31 sont constitués de blocs fonctionnels identiques. Par exemple le joncteur ETEO comporte : un équipement de terminaison de central ETEN remplissant les fonctions connues à ce jour pour raccorder des abonnés, et un équipement d'usager local LUE qui remplit les fonctions décrites dans la demande de brevet français n°91 12264 et consistant essentiellement à émettre et à recevoir sur une longueur d'onde fixée, en convertissant des signaux optiques en signaux électriques pour les fournir au réseau de connexion; et réciproquement convertissant des signaux électriques en signaux optiques pour les fournir au réseau de distribution DN; plus des fonctions supplémentaires nécessitées par le multiplexage temporel, et qui consistent entre autres à réguler le débit des informations restituées par le joncteur au réseau de connexion CN, ainsi qu'à piloter ce multiplexage temporel.

Cette régulation évite des pointes de débit préjudiciables au bon fonctionnement de ce réseau de connexion. En effet, le multiplexage temporel des informations conduit à regrouper les cellules dans des intervalles de temps correspondant respectivement aux différentes installations d'abonné qui émettent sur une même longueur d'onde. Comme ces cellules sont émises à un rythme qui peut être différent pour chacune des installations d'abonnés, et comme le multiplexage temporel transmet par salves les cellules provenant de chaque installation d'abonné, le joncteur ETEO reçoit des cellules avec un débit variable selon l'intervalle de temps considéré. En l'absence de régulation, le débit fourni au réseau de connexion CN comporterait donc des variations sensibles.

Les blocs fonctionnels RUE de l'ensemble des installations d'abonné CPNO, ..., CPN 255, et les blocs fonctionnels LUE de l'ensemble des joncteurs ETEO, ..., ETE31 constituent un concentrateur distribué DC.

L'établissement d'une communication, à la demande de l'une des installations d'abonné CPNO, ..., CPN255 peut être déclenché selon divers procédés. A titre d'exemple, selon un premier procédé l'unité de commande CU fait émettre cycliquement, par le joncteur de commande, une suite de messages d'interrogation adressés respectivement à toutes les stations d'abonné qui sont inactives. Une installation d'abonné qui veut établir une communication répond immédiatement, en émettant un message de réponse destiné au joncteur de commande, sur la longueur d'onde de ce dernier. Selon un second procédé, chaque station d'abonné est autorisée à émettre pendant de brefs intervalles de temps périodiques, un message d'appel à destination du joncteur de commande, sur la longueur d'onde de ce dernier. Pour appliquer ce second procédé, chaque station d'abonné doit être informée préalablement de : l'instant, la durée, et la période, de l'intervalle de temps où son émission est autorisée. Par exemple, ces paramètres sont fournis à l'installationn d'abonné à la fin de chaque communication. La durée de l'intervalle de temps peut être très courte car le message d'appel envoyé au joncteur peut être limité à très peu d'informations.

La communication demandée est établie ensuite en réalisant une sorte de multiplexage temporel, avec d'autres communications déjà établies, pour optimiser l'utilisation de la bande passante des joncteurs.

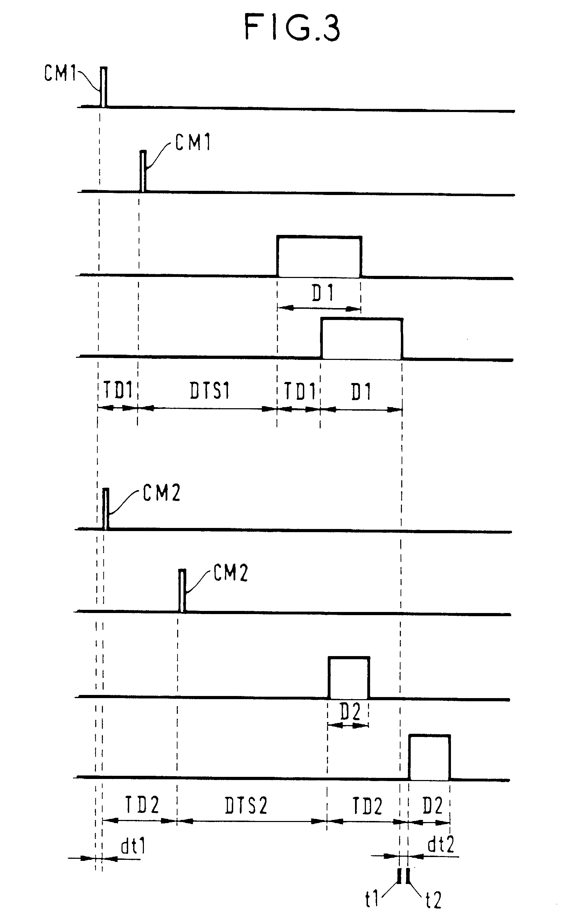

La figure 3 représente huit diagrammes temporels qui illustrent le multiplexage temporel des informations émises par deux installations d'abonnés CPN1 et CPN2 qui ont établi deux communications indépendantes sur une même longueur d'onde et avec un même joncteur ETEi. Lors de l'établissement de ces deux communications, le joncteur de commande ETEc émet un message de commande CM1 destiné à l'installation d'abonné CPN1 puis émet, après un intervalle de temps dt1, un message de commandes CM2 destiné à l'installation d'abonné CPN2. Ces messages sont représentés respectivement sur la première et la cinquième ligne de la figure 3. La deuxième et la sixième ligne de la figure 3 représentent respectivement la réception du message CM1 et du message CM2, par les installations d'abonné CPN1 et CPN2. La troisième et la septième ligne de la figure 3 représentent respectivement l'émission d'informations par les installations d'abonné CPN1 et CPN2. La quatrième et la huitième ligne de la figure 3 représentent respectivement la réception par le joncteur ETEi des informations émises par les installations d'abonné CPN1 et CPN2.

Le message CM1 est reçu par l'installation d'abonné CPN1 après un temps de propagation TD1, alors que le message CM2 est reçu par l'installation d'abonné CPN2 après un temps de propagation TD2 qui est différent de TD1 parce que ces deux installations d'abonné sont situées à des distances différentes par rapport au centre EX. Le message CM1 indique à l'installation d'abonné CPN1 qu'elle est autorisée à émettre après un délai d'attente DTS1, compté à partir de la réception du message CM1, et pour une durée D1. Le message CM2 indique à l'installation d'abonné CPN2 qu'elle est autorisée à émettre après un délai d'attente DTS2, compté à partir de la réception du message CM2, et pour une durée D2.

L'unité de commande CU du centre EX connaît les temps de propagation TD1 et TD2 par une mesure préalable réalisée lors de la création des installations d'abonné CPN1 et CPN2, ou bien réalisée périodiquement au moyen d'un message de test. L'unité de commande CU calcule les délais DTS1 et DTS2 en fonction des temps de propagation TD1 et TD2 et en fonction de la durée dt1 de l'intervalle de temps séparant l'émission des messages CM1 et CM2. Par exemple, l'unité de commande CU constate tout d'abord que le temps de propagation TD1 est plus petit que le temps de propagation TD2 et décide donc de choisir une durée du délai d'attente DTS1 plus petite que la durée du délai d'attente DTS2. La durée du délai DTS1 est choisie quelconque, mais de valeur supérieure à la durée nécessaire à une installation d'abonné pour recevoir complètement le message CM1 et l'interpréter. La durée D1 est choisie en fonction de la bande passante nécessaire pour l'installation d'abonné CPN1. Dans cet exemple, elle est supposée deux fois plus importante que celle nécessaire à l'installation d'abonné CPN2, c'est pourquoi la durée D1 est deux fois plus longue que la durée D2.

L'unité de commande CU en déduit l'instant t1 où se termine la réception par le joncteur ETEi des informations émises par l'installation d'abonné CPN1. Elle additionne à l'instant t1 une valeur de durée dt2 qui constitue une marge de sécurité, pour obtenir l'instant t2 où devra commencer la réception par le joncteur ETEi des informations émises par l'installation d'abonné CPN2. L'unité de commande CU en déduit alors la valeur de la durée du délai d'attente DTS2, connaissant le temps de propagation TD2, et la durée dt1 de l'intervalle de temps séparant l'émission du message CM1 et l'émission du message CM2.

Il n'y a pas de synchronisation à proprement parler entre les horloges des différentes installations d'abonné et celles des joncteurs. Ces horloges sont seulement plésiochrones. Chaque installation d'abonné utilise comme référence l'instant de réception d'un message de commande pour commencer à mesurer la durée du délai d'attente qui lui est imparti.

Dans un autre mode de réalisation préférentiel, un message de synchronisation est émis périodiquement par ETEi vers tous les CPNj. Chaque CPNj synchronise son horloge propre sur l'instant de réception du message de synchronisation. Les délais d'attente pour émettre, DTSj, sont comptés à partir de la réception du message de synchronisation. Dans cet autre mode de réalisation, les mêmes messages CM1 et CM2 sont conservés pour transporter les informations DTS1, D1, et DTS2, D2 respectivement, mais les instants d'émission sont déterminés à partir de la réception du message de synchronisation. Cette solution permet d'émettre les messages CM1 et CM2 sans se soucier de l'intervalle de temps dt1.

En prenant l'instant d'émission du message de synchronisation comme origine des temps, les données émises par une installation CPNj sont reçues dans ETEi entre les instants :

$$2TDj + DTSj$$

et

$$2TDj + DTSj + Dj$$

Le message de synchronisation peut également être utilisé à d'autres fonctions. Il peut comporter l'identifiant du joncteur ETEi et indiquer s'il est, ou non, joncteur de commande. Il peut commander à un CPNj particulier de répondre par un message prédéterminé, lui précisant DTSj. L'instant de réception de ce message dans ETEi permet de mesurer TDj.

Selon un mode de réalisation, il est nécessaire que le joncteur émette un message de commande CM pour chaque émission d'une installation d'abonné. Selon un autre mode de réalisation, un message de commande autorise une installation d'abonné à émettre périodiquement des informations, la période pouvant être indiquée aussi dans le message ou bien pouvant être fixée une fois pour un type d'installation d'abonné déterminé. Cette émission périodique peut être arrêtée par une décision de l'installation d'abonné ou bien par une décision de l'unité de commande du central, celle-ci envoyant un message de commande particulier vers l'installation d'abonné concernée, via le joncteur utilisé pour la communication en cours.

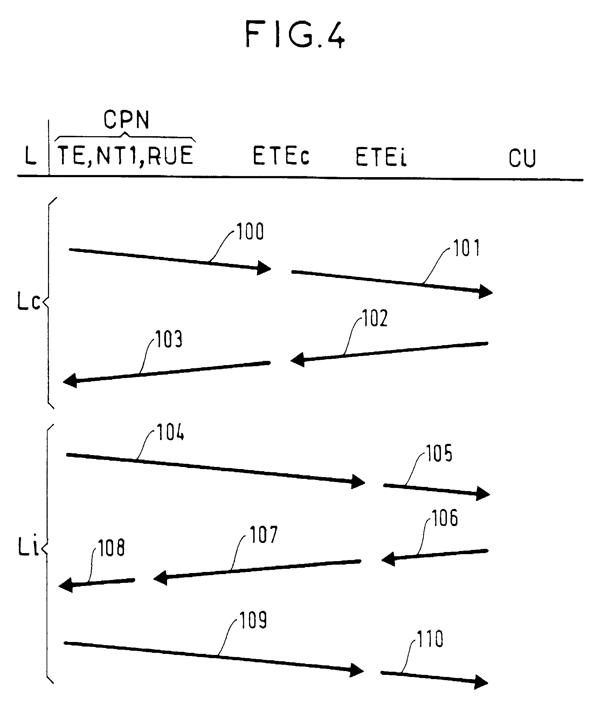

La figure 4 représente les échanges d'informations entre : une installation d'abonné CPN; un joncteur de commande ETEc; un joncteur ETEi qui sera en communication avec l'installation d'abonné CPN; et l'unité de commande CU du central. Le joncteur de commande ETEc est un joncteur identique aux autres, mais il est utilisé par les installations d'abonné comme interlocuteur pour l'établissement des communications. Chaque installation d'abonné comporte une table indiquant la relation entre les longueurs d'onde respectives et les identités respectives des différentes joncteurs du système de raccordement, notamment la longueur d'onde correspondant au joncteur de commande ETEc. Lorsqu'une installation d'abonné est inactive, son récepteur optique est accordé systématiquement sur la longueur d'onde du joncteur de commande. Deux cas sont alors possibles :

- L'installation d'abonné CPN demande l'établissement d'une communication : elle envoie un message au joncteur de commande ETEc sur la longueur d'onde propre à celui-ci, soit à la suite d'un message d'interrogation envoyé cycliquement par le joncteur de commande, soit dans un intervalle de temps réservé aux appels de cette installation d'abonné, conformément à l'un des deux procédés mentionnés précédemment. Le joncteur de commande ETEc reçoit ce message et le transmet à l'unité de commande CU du central. L'unité de commande CU envoie, par l'intermédiaire du joncteur de commande ETEc, un message à l'installation d'abonné CPN. Ce message contient l'identité d'un joncteur disponible ETEi, l'unité de commande CU connaissant l'état de chacun des joncteurs grâce à sa liaison par la liaison B. L'installation d'abonné CPN règle alors son émetteur optique et son récepteur optique sur la longueur d'onde du joncteur ETEi qui lui est affecté.

- L'établissement d'une communication est demandé par un abonné du réseau, qui veut établir une communication avec l'une des installations d'abonné desservie par le système de raccordement optique. Si l'installation d'abonné n'est pas déjà en communication l'unité de commande CU commande le joncteur de commande ETEc pour qu'il envoie à l'installation d'abonné demandée CPN l'identité d'un joncteur disponible ETEi. L'installation d'abonné reçoit ce message et règle son émetteur optique et son récepteur optique sur la longueur d'onde correspondant au joncteur ETEi qui lui est affecté. Si l'installation d'abonné CPN est déjà en communication avec un autre joncteur, l'unité de commande CU utilise cet autre joncteur pour dialoguer avec l'installation d'abonné.

Les communications peuvent être de trois types : diffusion d'un joncteur vers plusieurs installations d'abonné, sans transmission en sens inverse; diffusion d'un joncteur vers plusieurs installations d'abonné, avec transmission en sens inverse; ou transmission point à point, d'un joncteur à une seule installation d'abonné et réciproquement.

Le système de raccordement est particulièrement bien adapté aux communications du type diffusion puisque tout signal optique transmis par un joncteur est systèmatiquement acheminé vers toutes les installations d'abonné qui sont reliées au même réseau de diffusion. Il suffit que les récepteurs optiques des installlations d'abonné concernées par cette diffusion soient accordés sur la longueur d'onde du joncteur chargé de la diffusion de cette communication. Par contre, ce type de système de raccordement nécessite de chiffrer les communications de point à point pour éviter qu'une installation d'abonné puisse prendre connaissance du contenu des communications qui ne lui sont pas destinées. Quel que soit le type de communication, les informations échangées entre les installations d'abonné et les joncteurs sont mises sous la forme de cellules selon un format normalisé pour le mode de transfert asynchrone. Ce format comporte un champ appelé identificateur de circuit virtuel et un champ appelé identificateur de faisceau virtuel, qui permettent d'identifier chaque communication. L'équipement ETEN du joncteur ETEi attribue une valeur à ces champs pour chacune des communications, et l'équipement d'usager éloigné RUE de l'installation d'abonné CPN reconnaît cette valeur pour chaque communication.

Le chiffrement peut être réalisé selon le procédé suivant : une loi de codage est choisie par l'équipement d'usager éloigné RUE de l'installation d'abonné CPN, puis est transmise sous une forme protégée, à l'équipement d'usager local LUE du joncteur ETEi affecté à cette communication. Le codage et le décodage sont donc ainsi réalisés selon une même loi, dans le joncteur et l'installation d'abonné qui sont en communication.

Un autre procédé de chiffrement peut consister à attribuer une loi de chiffrement fixée pour chaque installation d'abonné, et à indiquer à chacun des joncteurs du système de raccordement les lois de chiffrement de chacune des installations d'abonné du système. Ce procédé simplifie les échanges de messages de signalisation entre l'installation d'abonné et le joncteur, mais nécessite d'initialiser chaque installation d'abonné avec une loi de chiffrement prédéterminée.

Considérons les principaux messages qui sont émis par l'équipement d'usager local LUE d'un joncteur, vers l'équipement d'usager éloigné RUE d'une ou de plusieurs installations d'abonné CPN :

- un message, déjà mentionné précédemment, est utilisé par le joncteur de commande ETEc, pour indiquer à chacune de ces installations d'abonné l'instant et la durée de l'intervalle de temps où elle est autorisée à émettre des informations;
- un message est émis par chacun des joncteurs, périodiquement ou pseudo-périodiquement, pour indiquer l'identité du joncteur, afin de maintenir à jour dans le bloc fonctionnel RUE de chaque installation d'abonné CPN, une table indiquant la relation entre chacune des longueurs d'onde que peut recevoir effectivement l'installation d'abonné et les identités des joncteurs qui sont effectivement accessibles à cette installation d'abonné;

- un message émis par le joncteur, le joncteur de commande ETEc par exemple, pour commander à une installation d'abonné d'abandonner la longueur d'onde sur laquelle elle est accordée, puis de s'accorder sur une autre longueur d'onde indiquée par le message.

Certains de ces messages sont transmis en clair et peuvent être reçus et traités par tous les équipements d'usagers lointains RUE de toutes les installations d'abonné.

Considérons les messages transmis d'une installation d'abonné CPN au joncteur. Ces messages sont généralement des messages de signalisation classique engendrés par un terminal T1, mais il y a au moins deux messages particuliers qui sont engendrés par l'équipement d'usager éloigné RUE :

- un message pour indiquer la loi de chiffrement qui va être utilisée, lors de l'établissement d'une communication; ce message étant envoyé au joncteur ETEi utilisé pour une communication, après que le joncteur de commande ETEc ait commandé à l'installation d'abonné de s'accorder sur une longueur d'onde correspondant à un joncteur ETEi autre que le joncteur de commande ETEc;
- un message émis à destination du joncteur de commande ETEc pour indiquer que l'installation d'abonné souhaite accéder à un service de diffusion dont l'identité est précisée dans le contenu du message.

La figure 4 représente l'établissement d'une communication de point à point seulement ou de point à point combinée avec une diffusion. L'établissement de cette communication commence par un message de demande 100 émis par le terminal TE et retransmis au joncteur de commande ETEc par l'équipement d'usager éloigné RUE, sur la longueur d'onde Lc du joncteur de commande. Ce dernier retransmet le message, au cours de l'étape noté 101, à l'unité de commande CU du central EX. Cette dernière répond au joncteur de commande ETEc, au cours de l'étape notée 102, par un message fournissant : l'identité d'un autre joncteur ETEi, choisi parmi les joncteurs disponibles à l'instant considéré; le délai d'attente DTS qui définit l'instant où l'émission est autorisée; et la durée D pendant laquelle l'émission est autorisée. Au cours de l'étape 103 le joncteur de commande ETEc retransmet le message à l'installation d'abonné. Cette dernière accorde son récepteur optique et son émetteur optique sur la longueur d'onde Li correspondant à l'identité du joncteur ETEi.

Ces informations sont mémorisées dans l'équipement d'usager éloigné RUE, et le reste du message est transmis au terminal TE. Au cours de l'étape 104, le terminal TE répond par un message d'accusé de réception. L'équipement d'usager RUE ajoute à ce message d'accusé de réception une indication définissant la loi de chiffrement qui sera utilisée pour cette communication de point à point. Le message est reçu par le joncteur ETEi puis est retransmis à l'unité de commande CU au cours de l'étape 105. Au cours de l'étape 106, l'unité de commande CU autorise le joncteur ETEi à établir la communication, en réalisant le chiffrement défini par cette loi. Au cours de l'étape 107, le joncteur ETEi envoie des informations chiffrées à l'installation d'abonné CPN. L'équipement d'usager éloigné RUE réalise le déchiffrement de ces informations et les retransmet, au cours de l'étape 108, au terminal TE. L'installation d'abonné CPN reconnaît que le message lui est destiné en reconnaissant la valeur des champs identificateur de circuit virtuel et identificateur de faisceau virtuel, car celle-ci appartient à certaines valeurs mémorisées dans des tables que comporte le terminal TE.

Au cours de l'étape 109, le terminal TE émet des informations vers l'abonné destinataire, et des informations de signalisation. Les informations de signalisation sont transmises, au cours de l'étape 110, à l'unité de commande CU, par le joncteur ETEi. Les informations destinées à l'abonné destinataire dans le réseau de télécommunication sont transmises à cet abonné par le réseau de connexion CN.

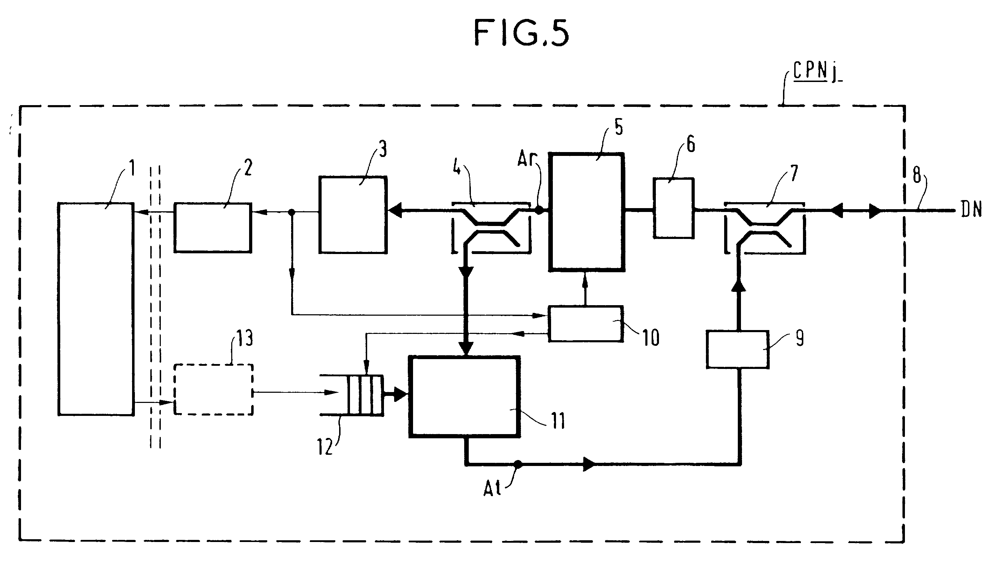

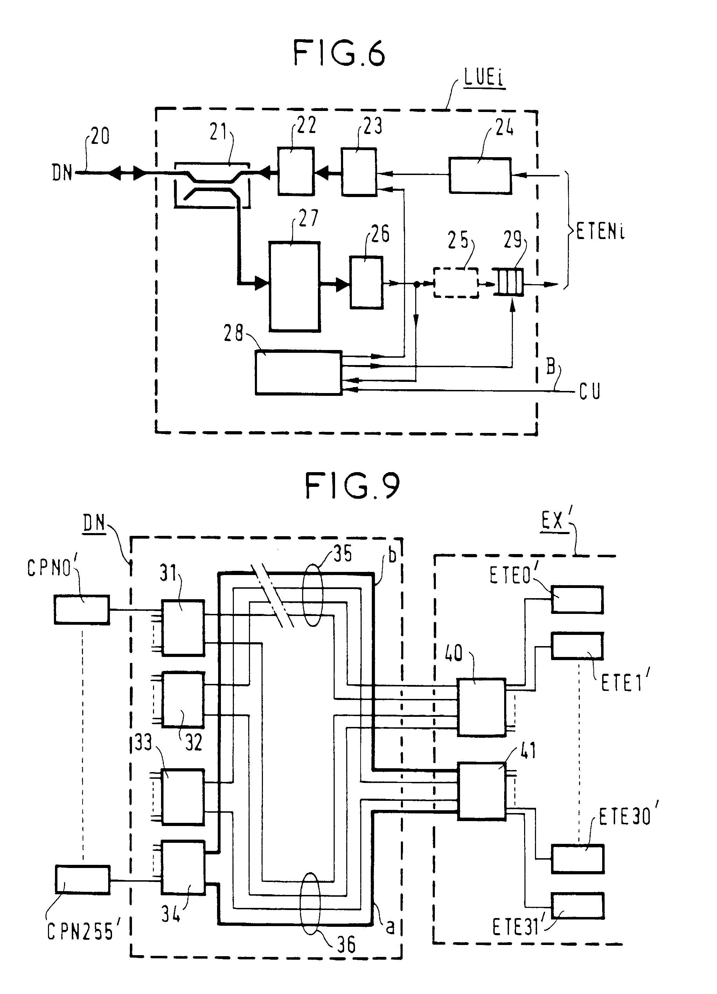

Les figures 5 et 6 représentent respectivement les schémas synoptiques d'un exemple de réalisation d'une partie de l'installation d'abonné CPNj et d'un exemple de réalisation de l'équipement d'usager local, LUEi, d'un joncteur ETEi, permettant une communication dans les deux sens sur une seule fibre optique et ne nécessitant qu'un seul laser accordable. Ce laser accordable est situé dans le joncteur ETEi et il fournit une onde porteuse pour les deux sens de transmission. L'installation d'abonné CPNj comporte :

- un terminal 1, par exemple un poste téléphonique; les équipements intermédiaires entre ce terminal 1 et les autres équipements listés ci-après n'étant pas représentés;
- un dispositif 2 de déchiffrement des informations destinées au terminal 1;
- un dispositif 13 de chiffrement des informations issues du terminal 1 (dipositif optionnel);
- un photodétecteur 3, par exemple une photodiode à avalanche;
- deux coupleurs 4 et 7;
- deux isolateurs optiques 6 et 9;
- un filtre optique 5 accordable par un signal électrique appliqué à une entrée de commande;
- un circuit de commande 10;
- un amplificateur optique 11 dont le gain est commandable par un signal électrique appliqué à une entrée de commande;
- et une mémoire tampon électronique 12.

L'installation d'abonné CPNj est reliée au réseau de distribution DN par une fibre optique unique 8, utilisée pour les deux sens de transmission. Le signal optique arrivant par la fibre 8 traverse successivement le coupleur 7, l'isolateur 6, le filtre 5, et le coupleur 4, puis est convertie en signal électrique par le photodétecteur 3. Une partie de ce signal optique est prélevée par le coupleur 4 et est amplifiée par l'amplificateur 11, puis traverse l'isolateur 9, et est réinjectée dans la fibre 8 par le coupleur 7, pour être acheminée en direction du central. Le photodétecteur 3 possède une sortie électrique reliée à une entrée du circuit 2 de déchiffrement et à une entrée du circuit de commande 10. Le circuit de chiffrement 13 possède une sortie reliée à une entrée de la mémoire tampon 12. Une entrée de commande de la mémoire tampon 12 est reliée à une sortie du circuit de commande 10. L'entrée de commande de l'amplificateur optique 11 est reliée à une sortie de la mémoire tampon 12. L'entrée de commande du filtre 5 est reliée à une sortie du circuit de commande 10.

Les informations de signalisation n'étant pas chiffrées, elles sont prélevées à la sortie du photodétecteur 3 pour être fournies au circuit de commande 10. Par contre, les autres informations sont chiffrées et nécessitent un déchiffrement dans le dispositif 2. Les informations émises par le terminal 1 peuvent éventuellement être chiffrées par le dispositif de chiffrement 13 puis sont stockées dans la mémoire tampon 12 en attendant l'instant où l'émission de ces informations est autorisée. Le circuit de commande 10 gère l'écriture et la lecture de ces informations dans la mémoire tampon 12. Les informations lues dans la mémoire tampon 12 sont utilisées pour moduler le gain de l'amplificateur 11 de manière binaire. L'amplificateur 11 module l'amplitude de la fraction de signal optique dérivée par le coupleur 4, ce qui évite l'utilisation d'un laser accordable dans chaque installation d'abonné.

Chaque joncteur inactif émet en permanence des cellules. Lorsqu'il n'a pas d'informations à transmettre, il émet des cellules vides ayant un format prédéterminé. Le circuit de commande 10 comporte une horloge qui est asservie, selon un procédé connu, sur le rythme de réception des cellules, vides ou non, qu'il reçoit. La présence de cellules, vides ou non, sur une longueur d'onde permet en outre aux installations d'abonné de savoir qu'un joncteur est présent sur cette longueur d'onde. Par ailleurs, le circuit de commande 10 comporte un dispositif d'asservissement de type connu, pour asservir en permanence le réglage du filtre sur la longueur d'onde des cellules reçues.

La figure 6 représente le schéma synoptique d'un exemple de réalisation de l'équipement d'usager local LUEi d'un joncteur ETEi, qui comprend :

- un coupleur 21;
- un isolateur optique 22;
- un laser 23 accordé sur une longueur d'onde fixée et différente pour chaque joncteur ETE;
- un dispositif de chiffrement 24;
- un dispositif de déchiffrement 25 (optionnel);
- un photodétecteur 26, par exemple une photodiode à avalanche;

- un filtre optique 27, accordé sur une longueur d'onde fixée et différente pour chaque joncteur ETE;
- un circuit de commande 28, relié par la liaison B à l'unité de commande CU du central;
- une mémoire tampon 29.

Le joncteur ETEi est relié au réseau de distribution DN par une fibre optique unique 20, utilisée pour les deux sens de transmission. Cette fibre optique 20 est reliée à un accès du coupleur 21. Deux autres accès du coupleur 21 sont reliés respectivement à une sortie de l'isolateur optique 22 et à une entrée du filtre 27. Le coupleur 21 transmet à la fibre 20 un signal optique fourni par l'isolateur 22 et qui est destiné au réseau de distribution DN. Par contre, le coupleur 21 prélève un signal optique provenant du réseau de distribution DN et l'applique à l'entrée du filtre 27. Le filtre 27 possède une sortie reliée à une entrée du photodétecteur 26.

Une sortie électrique du photodétecteur 26 est reliée à une entrée du circuit de commande 28 et à une entrée du circuit dedéchiffrement 25. Une sortie du circuit 25 est reliée à une entrée de la mémoire tampon 29. Une sortie de la mémoire tampon 29 est reliée à une entrée du réseau de connexion CN à travers l'équipement ETENi. Une entrée de commande de la mémoire tampon 29 est reliée à une sortie du circuit de commande 28.

Une sortie du réseau de connexion CN est reliée, à travers l'équipement ETENi, à une entrée du circuit de chiffrement 24. Une sortie du circuit 24 est reliée à une entrée de commande d'amplitude du laser 23. Une sortie du circuit de commande 28 est reliée à une autre entrée de commande d'amplitude du laser 23.

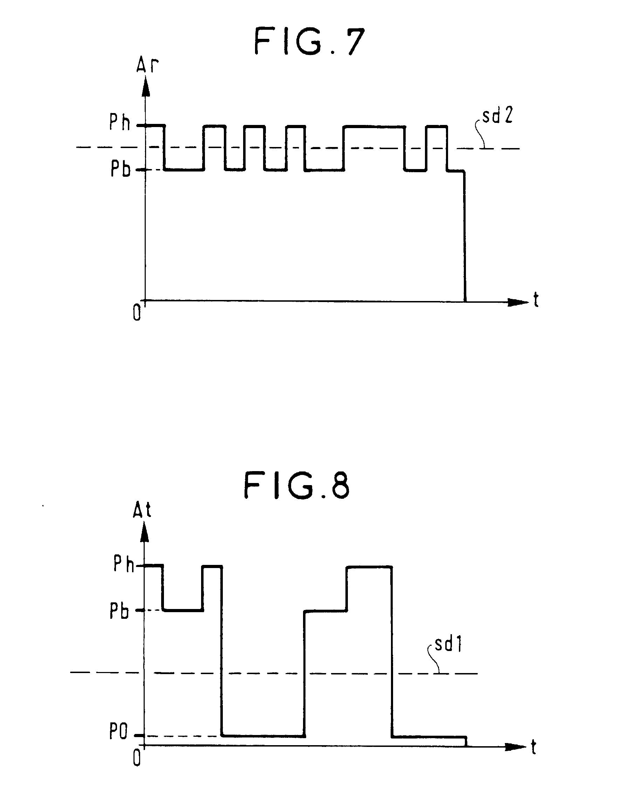

Les figures 7 et 8 illustrent le fonctionnement de l'installation d'abonné CPNi et du joncteur ETEj lorsqu'ils sont en communication. La figure 7 représente l'amplitude Ar, en fonction du temps t, du signal optique à la sortie du filtre 5, c'est-à-dire le signal optique se propageant du joncteur vers l'installation d'abonné. La figure 8 représente l'amplitude At, en fonction du temps t, du signal optique à la sortie de l'amplificateur 11 qui est utilisé comme modulateur, c'est-à-dire l'amplitude du signal optique se propageant de l'installation d'abonné vers le joncteur. Les références Ar et At sont également portées sur la figure 5 pour indiquer les endroits où ces amplitudes se manifestent.

L'amplitude Ar varie entre un niveau haut, Ph, et un niveau bas Pb qui est nettement supérieur à 0, de façon à fournir à l'installation d'abonné un signal optique ayant une énergie suffisante pour permettre la transmission d'un signal en retour. La détection des valeurs logiques est réalisée, en sortie du photodétecteur 3, par comparaison de l'amplitude du signal électrique fourni par le photodétecteur 3 avec une valeur de seuil sd2 égale à la demi-somme des valeurs Ph et Pb.

L'amplificateur 11 module l'amplitude du signal fourni par le coupleur 4 et qui est constitué par une fraction fixe, par exemple la moitié, du signal appliqué à l'entrée du coupleur 4 et dont le graphe est représenté sur la figure 7. L'amplificateur 11 module ce signal entre une valeur minimale PO qui est presque nulle et une valeur maximale qui est égale à l'amplitude Pb ou Ph, selon le signal fourni à l'amplificateur 11 à l'instant considéré. Dans le joncteur ETEj, le coupleur 21 extrait ce signal et l'applique au photodétecteur 26. La détection d'un niveau logique à la sortie du détecteur 26 est réalisée en comparant l'amplitude du signal électrique fourni par le détecteur 26 à une valeur de seuil sd1 égale à la demi-somme des valeurs à PO et Pb.

Le débit dans les deux sens de transmission n'est pas forcément identique. Il peut être, par exemple, de 600 mégabits par seconde dans le sens de transmission du joncteur vers l'installation d'abonné; et de 150 mégabits par seconde dans le sens de transmission de l'installation d'abonné vers le joncteur.

Dans l'installation d'abonné CPNi, la mémoire tampon 12 permet de stocker les informations à transmettre en attendant l'instant où elles seront autorisées à être transmises. Ces informations sont fournies à un rythme constant par le terminal 1, sous la forme de cellules au format normalisé pour le mode de transfert asynchrone. Dans le joncteur ETEj, la mémoire tampon 29 a pour fonction de régulariser le débit de ces informations avant de les retransmettre au réseau de connexion CN, car chaque entrée d'un réseau de connexion à mode de transfert asynchrone est prévue pour un certain débit maximal. Ce débit maximal ne doit pas être dépassé. D'autre part, le taux de perte de cellules dans ce réseau de connexion est d'autant plus faible que les débits appliqué aux entrées de ce réseau sont réguliers.

La figure 9 représente le schéma synoptique d'un exemple de réalisation préférentiel du réseau de distribution DN, pour relier un centre EX' à des installations d'abonné CPNO' à CPN255'. Cet exemple de réalisation présente l'avantage d'assurer le maintien du service même si une défaillance du réseau de distribution interrompt la moitié des voies de transmission dans ce réseau de distribution DN.

Le centre EX' comporte par exemple 32 joncteurs ETEO', ..., ETE31', et deux coupleurs optiques 40 et 41 ayant chacun : seize accès reliés respectivement à 16 sorties des joncteurs ETEO', ... , ETE31', et quatre accès reliés respectivement à quatre fibres optiques du réseau de distribution DN. Quatre fibres dont deux reliées au coupleur 40 et deux reliées au coupleur 41 constituent un câble 35, alors que les quatre autres fibres reliées à ces coupleurs constituent un câble 36 circulant par un chemin différent de celui du câble 35. Si l'un des deux câbles est endommagé accidentellement, l'autre câble n'est pas affecté.

A proximité des installations d'abonné CPN1', ..., CPN255', le réseau de distribution DN comporte en outre quatre coupleurs optiques 31 à 34 comportant chacun deux accès reliés à deux fibres du réseau de distribution DN, et 64 accès reliés respectivement à 64 installations d'abonné CPN1', ... , CPN255'. Par exemple, le coupleur 34 comporte deux accès reliés respectivement à deux accès du coupleur 41 par deux fibres, a et b, appartenant respectivement au câble 36 et au câble 35. En cas de rupture du câble 35, le coupleur 34 reste relié au coupleur 41 par la fibre, a du câble 36. Par conséquent les 64 installations d'abonné qui sont reliées au coupleur 34 conservent l'accès à seize des joncteurs ETE0', ... , ETE31', ce qui permet d'assurer encore une grande partie du service. Si le joncteur de commande n'est plus accessible par certains abonnés, il est possible d'attribuer la fonction de joncteur de commande à un second joncteur.

De nombreuses variantes de cet exemple de réalisation sont à la portée de l'homme de l'art, tout en conservant le principe de transmission par deux câbles indépendants 35 et 36, vers un même coupleur. Le nombre de coupleurs optiques utilisés, et le nombre d'accès que comporte chacun de ces coupleurs optiques, sont choisis en fonction de considérations énergétiques : ils dépendent de la sensibilité des récepteurs optiques, de la puissance des émetteurs optiques, et de la présence ou de l'absence d'amplificateur optique dans le réseau de distribution DN.

L'invention n'est pas limitée aux exemples de réalisation représentés sur les figures 5 et 6 pour une installation d'abonné et pour un joncteur. Tout système de transmission bidirectionnel sur une même longueur d'onde et une même fibre optique peut être adapté pour mettre en oeuvre l'invention. En particulier, des modulations autres que la modulation d'amplitude peuvent être utilisées.

Les joncteurs ont chacun une longueur d'onde fixée, mais ils peuvent comporter un émetteur optique accordable, afin de rendre les joncteurs facilement interchangeables. L'émetteur optique est alors accordé sur une longueur d'onde fixée au moment de l'installation du système.

## Revendications

1. Système de raccordement optique d'installations d'abonné à un centre de commutation (EX) d'un réseau de télécommunication assurant des services interactifs et des services non interactifs, ce centre comportant un réseau de connexion (CN), des moyens de commande (CU) du réseau de connexion, et des joncteurs (ETE); chaque joncteur comportant un émetteur optique (23) et un récepteur optique (26) accordé sur une même longueur d'onde, différente pour chaque joncteur; chaque installation d'abonné (CPN) comportant un émetteur optique (11) et un récepteur optique (3, 5) accordés sur une même longueur d'onde réglable, la longueur d'onde du récepteur étant réglée sur la longueur d'onde (Lc) d'un joncteur appellé joncteur de commande, lorsque l'installation d'abonné n'est pas en cours de communication avec un service interactif, ce système comportant :

- un réseau de distribution optique (DN) reliant tous les émetteurs optiques des joncteurs à tous les récepteurs optiques des installations d'abonné, et reliant les émetteurs optiques de toutes les installations d'abonné à tous les récepteurs optiques des joncteurs;
- des moyens de commande (CU) pour affecter une longueur d'onde différente à chacune des installations d'abonné qui sont en cours de communication à un même instant, cette longueur d'onde correspondant à un joncteur disponible et qui n'est pas le joncteur de commande;

   caractérisé en ce que :

- les services non interactifs (SD, CY) sont connectés (C1,...C4) au joncteur de commande (ETE0) pour transmettre des signaux des services non interactifs sur la longueur d'onde (Lc) du joncteur de commande;
- chaque installation d'abonné comporte des moyens (1, 10) pour demander aux moyens de commande (CU) du réseau de connexion (CN) de connecter (C5) un joncteur (ETE31), par lequel cette installation est déjà en communication avec un service interactif, avec l'un au moins des services non interactifs (CY, SD), pour transmettre sur la longueur d'onde de ce joncteur (ETE31) des signaux d'au moins un service non interactif, parallèlement avec la communication déjà établie, et comporte des moyens (1, 10) pour recevoir ces signaux;
- chaque installation d'abonné comporte des moyens (1, 10) pour recevoir en outre des signaux d'au moins un service non interactif, transmis sur la longueur d'onde (Lc) du joncteur de commande, lorsque cette installation d'abonné n'est pas en cours de communication avec un service interactif.

2. Système selon la revendication 1, caractérisé en ce qu'il comporte en outre des moyens (CY) pour chiffrer des signaux de services non interactifs; et en ce qu'au moins une installation d'abonné (CPN0, ..., CPN255) comporte en outre des moyens pour déchiffrer ces signaux.

3. Système selon la revendication 1, dans lequel tous les joncteurs sont identiques, mis à part leur longueur d'onde; le joncteur de commande étant un joncteur quelconque (ETE0) choisi, par les moyens de commande (CU) du centre de commutation, parmi les joncteurs en état de marche;
   caractérisé en ce que ces moyens de commande (CU) commandent le réseau de connexion (CN) pour connecter en permanence le joncteur (ETEO) choisi comme joncteur de commande, aux services non interactifs.

**Patentansprüche**

1. Optisches System zum Anschluß von Teilnehmereinrichtungen an eine Vermittlungszentrale (EX) eines Telekommunikationsnetzes mit interaktiven und nichtinteraktiven Diensten, wobei diese Zentrale ein Durchschaltenetz (CN), Mittel zur Steuerung (CU) des Durchschaltenetzes und Verbindungssätze (ETE) umfaßt; wobei jeder Verbindungssatz einen optischen Sender (23) und einen optischen Empfänger (26) enthält, die auf eine gleiche Wellenlänge abgestimmt sind, welche für jeden Verbindungssatz unterschiedlich ist; wobei jede Teilnehmereinrichtung (CPN) einen optischen Sender (11) und einen optischen Empfänger (3, 5) enthält, die auf eine gleiche einstellbare Wellenlänge abgestimmt sind, wobei die Wellenlänge des Empfängers auf die Wellenlänge (Lc) eines als Steuerverbindungssatz bezeichneten Verbindungssatzes eingestellt ist, wenn die Teilnehmereinrichtung nicht mit einem interaktiven Dienst verbunden ist, wobei dieses System umfaßt:

   - ein optisches Verteilnetz (DN), das alle optischen Sender der Verbindungssätze mit allen optischen Empfängern der Teilnehmereinrichtungen verbindet und die optischen Sender aller Teilnehmereinrichtungen mit allen optischen Empfängern der Verbindungssätze verbindet;
   - Steuermittel (CU), um jeder der Teilnehmereinrichtungen, die gleichzeitig eine Verbindung haben, eine andere Wellenlänge zuzuweisen, wobei diese Wellenlänge einem verfügbaren Verbindungssatz entspricht, der nicht der Steuerverbindungssatz ist;

   dadurch gekennzeichnet, daß:

   - die nichtinteraktiven Dienste (SD, CY) mit dem Steuerverbindungssatz (ETE0) verbunden sind (C1, ... C4), um Signale der nichtinteraktiven Dienste auf der Wellenlänge (Lc) des Steuerverbindungssatzes zu übertragen;
   - jede Teilnehmereinrichtung Mittel (1, 10) aufweist, um von den Steuermitteln (CU) des Durchschaltenetzes (CN) die Verbindung (C5) eines Verbindungssatzes (ETE31), durch den diese Einrichtung bereits mit einem interaktiven Dienst verbunden ist, mit mindestens einem der nichtinteraktiven Dienste (CY, SD) zu verlangen, um parallel mit der bereits hergestellten Verbindung auf der Wellenlänge dieses Verbindungssatzes (ETE31) Signale von mindestens einem interaktiven Dienst zu übertragen, und Mittel (1, 10) aufweist, um diese Signale zu empfangen;
   - jede Teilnehmereinrichtung Mittel (1, 10) aufweist, um außerdem Signale von mindestens einem nichtinteraktiven Dienst zu empfangen, die auf der Wellenlänge (Lc) des Steuerverbindungssatzes übertragen werden, wenn diese Teilnehmereinrichtung nicht mit einem interaktiven Dienst verbunden ist.

2. System nach Anspruch 1, dadurch gekennzeichnet, daß es außerdem Mittel (CY) zur Verschlüsselung der Signale der nichtinteraktiven Dienste aufweist; und daß mindestens eine Teilnehmereinrichtung (CPN0 ..., CPN255) außerdem Mittel zur Entschlüsselung dieser Signale aufweist.

3. System nach Anspruch 1, bei dem sämtliche Verbindungssätze bis auf ihre Wellenlänge identisch sind; wobei der Steuerverbindungssatz irgendein von den Steuermitteln (CU) der Vermittlungszentrale unter den in Betrieb befindlichen Verbindungssätzen gewählter Verbindungssatz (ETE0) ist; dadurch gekennzeichnet, daß diese Steuermittel (CU) das Durchschaltenetz CN so steuern, daß der als Steuerverbindungssatz gewählte Verbindungssatz (ETE0) dauerhaft mit den nichtinteraktiven Diensten verbunden wird.

**Claims**

1. Optical system for connecting customer premises networks to an exchange (EX) of a telecommunication network providing interactive and non-interactive services, said exchange comprising a connection network (CN), a connection network control unit (CU) and exchange termination equipments (ETE), each exchange termination equipment comprising an optical sender (23) and an optical receiver (26) tuned to the same wavelength, different for each exchange termination equipment, each customer premises network (CPN) comprising an optical sender (11) and an optical receiver (3, 5) tuned to the same wavelength which is variable, the wavelength of the receiver being set to the wavelength (Lc) of a control exchange termination equipment when the customer premises network is not communicating with an interactive service, the system comprising:

   - an optical distribution network (DN) connecting all exchange termination equipment optical senders to all customer premises network optical receivers and connecting all customer premises network optical senders to all exchange termination equipment optical receivers,

- a control unit (CU) for assigning a different wavelength to each customer premises network communicating at a given time, said wavelength corresponding to an available exchange termination equipment which is not the control exchange termination equipment,

  characterised in that:

- the non-interactive services (SD, CY) are connected (C1 ..., C4) to the control exchange termination equipment (ETE0) to send non-interactive service signals at the control exchange termination equipment wavelength (Lc),
- each customer premises network comprises means (1, 10) for requesting the control unit (CU) of the connection network (CN) to connect (C5) an exchange termination equipment (ETE31) via which said installation is already in communication with an interactive service to at least one non-interactive service (CY, SD) to send at the wavelength of said exchange termination equipment (ETE31) signals of at least one non-interactive service in parallel with the call already set up and means (1, 10) for receiving said signals, and
- each customer premises network comprises means (1, 10) for further receiving signals of at least one non-interactive service sent at the control exchange termination equipment wavelength (Lc) when said customer premises network is not communicating with an interactive service.

2. System according to claim 1 characterised in that it further comprises means (CY) for encyphering non-interactive service signals and in that at least one customer premises network (CPN0, ..., CPN255) further comprises means for decyphering said signals.

3. System according to claim 1 wherein all exchange termination equipments are identical apart from their wavelength, the control exchange termination equipment being any serviceable exchange termination equipment (ETE0) chosen by said exchange control unit (CU),
   characterised in that said control unit (CU) commands said connection network (CN) to connect the exchange termination equipment (ETE0) chosen as the control exchange termination equipment to the non-interactive services at all times.

# FIG.1

# FIG.2

# FIG.3

# FIG.4

# FIG.5

EP 0 568 453 B1

# FIG.6

# FIG.9

18

# FIG.7

# FIG.8